(19)

Europäisches Patentamt

European Patent Office

Office européen des brevets

(11) **EP 2 508 241 B1**

(12) **EUROPEAN PATENT SPECIFICATION**

(45) Date of publication and mention
of the grant of the patent:
**22.10.2014 Bulletin 2014/43**

(51) Int Cl.:
*B24B 7/17* $^{(2006.01)}$      *B24B 7/22* $^{(2006.01)}$
*F01N 3/022* $^{(2006.01)}$    *B01D 46/24* $^{(2006.01)}$

(21) Application number: **12161024.0**

(22) Date of filing: **23.03.2012**

(54) **Plugged honeycomb structure**

Abgedichtete Wabenstruktur

Structure en nid d'abeille raccordée

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2011 JP 2011072748**

(43) Date of publication of application:
**10.10.2012 Bulletin 2012/41**

(73) Proprietor: **NGK Insulators, Ltd.
Nagoya-shi, Aichi 467-8530 (JP)**

(72) Inventor: **IIDA, Tomohiro
Nagoya-shi, Aichi 467-8530 (JP)**

(74) Representative: **Paget, Hugh Charles Edward et al
Mewburn Ellis LLP
33 Gutter Lane
London
EC2V 8AS (GB)**

(56) References cited:
**EP-A1- 1 857 163**      **EP-A2- 1 769 838**
**US-A1- 2006 213 164**

**Description**

BACKGROUND OF THE INVENTION

Field of the Invention

The present invention relates to a plugged honeycomb structure suitably for use as a dust collecting filter such as a diesel particulate filter (DPF)- and to a method of making such a plugged honeycomb structure.

Description of the Related Art

Exhaust gases discharged from internal combustion engines such as diesel engines include a large amount of soot which becomes a cause for environmental pollutions. Therefore, filters for catching (filtering) the soot to remove the soot from the exhaust gases are mounted on exhaust systems of these internal combustion engines.

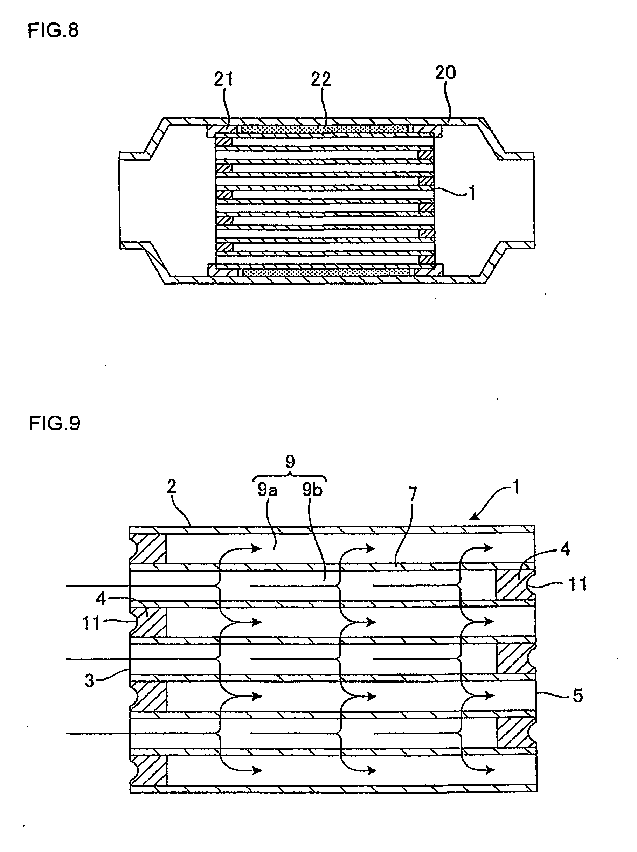

Usually as the filter for use in such a purpose, as shown in Fig. 9, there is used a plugged honeycomb structure 1 including a honeycomb structured body 2 where a plurality of cells 9 communicating between an inlet end surface 3 which becomes an inlet side of a fluid and an outlet end surface 5 which becomes an outlet side of the fluid are partitioned by porous partition walls 7; and plugged portions 4 to plug open frontal areas of predetermined cells 9a on the side of the inlet end surface 3 and open frontal areas of remaining cells 9b on the side of the outlet end surface 5.

In the filter constituted of the plugged honeycomb structure 1 having such a constitution, the exhaust gas flows into the plugged honeycomb structure 1 through the inlet end surface 3. The soot included in the exhaust gas is removed, and then the exhaust gas flows out of the structure through the outlet end surface 5. Specifically, the exhaust gas first flows into the cells 9b whose open frontal areas are not plugged on the inlet end surface 3 side of the plugged honeycomb structure 1 and are plugged on the outlet end surface 5 side. The exhaust gas passes through pores of the porous partition walls 7, moves to the cells 9a whose open frontal areas are plugged on the inlet end surface 3 side and are not plugged on the outlet end surface 5 side, and is discharged to the outside through the cells 9a. In this case, the partition walls 7 become filter layers, and the soot in the exhaust gas is caught by the partition walls 7, and deposited on the partition walls 7.

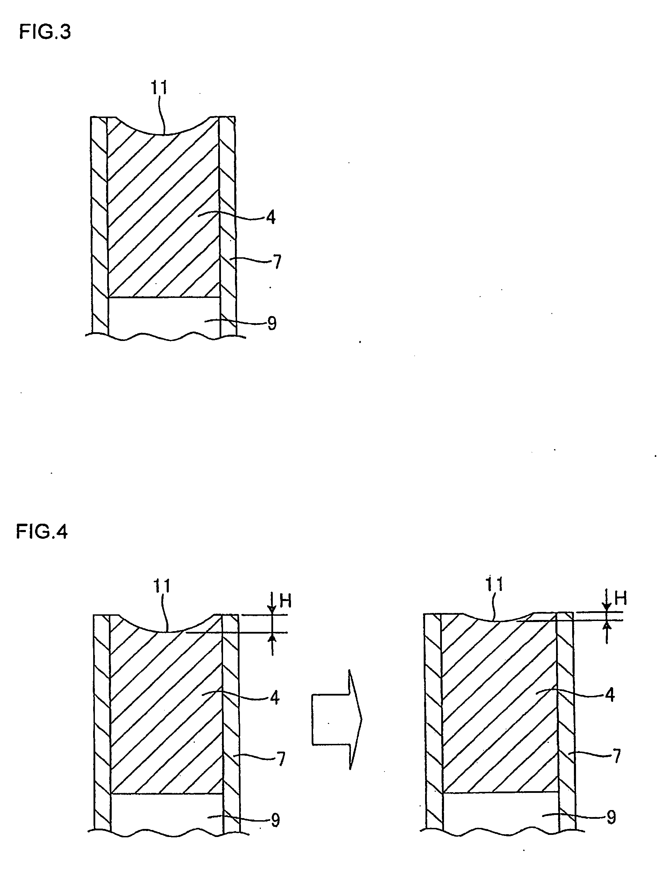

Usually, the plugged portions 4 of the plugged honeycomb structure 1 are formed by charging the cells with a constituent material of the plugged portions in a slurried state or the like, followed by firing. However, as shown in Fig. 3, a recess portion (a shrinkage cavity) 11 is generated at an end of each of the plugged portions 4 during the firing. When the recess portion 11 is present at the end of the plugged portion 4 in this manner, the soot is easily deposited at the end of the plugged portion 4 on the inlet end surface 3 side. In general, when the filter constituted of the plugged honeycomb structure is used continuously for a long period of time, a treatment (regeneration) of burning and removing the deposited soot is periodically performed so that a pressure loss increased by the soot deposited in the filter with an elapse of time is decreased to return a filter performance to an initial state.

However, the soot deposited at the ends of the plugged portions 4 is not easily completely burnt during the regeneration of the plugged honeycomb structure 1, and the unburnt soot remains as it is at the ends of the plugged portions 4. Moreover, the soot which remains at the ends of the plugged portions 4 in this manner is gradually accumulated during the use for the long period of time, and the soot finally covers not only the ends of the plugged portions 4 but also the open frontal areas of the adjacent cells 9. In consequence, the pressure loss of the filter rapidly increases, which incurs the deterioration of fuel efficiency.

As a measure for suppressing the deposition of the soot at the ends of the plugged portions, Patent Document 1 has suggested a technology of densifying the surfaces of the plugged portions to decrease surface roughness so that the soot is not easily deposited in the plugged portions (see Patent Document 1). In this technology, as a specific method for densifying the surfaces of the plugged portions to decrease the surface roughness, the cells are first charged with the constituent material of the plugged portions, followed by firing, as usual. Afterward, the end surfaces of the plugged honeycomb structure are spray-coated with a densifying material having regulated characteristics, to attach the material to the ends of the plugged portions.

In such a method, however, the densifying material to spray-coat the end surfaces of the plugged honeycomb structure enters the cells opened in the end surfaces of the plugged honeycomb structure, and also adheres to the surfaces of the partition walls in the vicinity of the open frontal areas of the cells. Therefore, not only the ends of the plugged portions but also the partition walls are densified. As described above, the porous partition walls by which the cells are partitioned function as the filter layers for catching the soot. Therefore, when the densifying material adheres to part of the partition walls to densify the walls and hence the exhaust gas does not easily pass through the walls, areas of the filter layers decrease, which incurs the deterioration of an ability to collect the soot and the increase of the pressure loss.

Furthermore, when the densifying material adheres to the ends of the plugged portions, the total length of the plugged honeycomb structure increases, which becomes a problem during the canning of the plugged honeycomb structure. That is, when the plugged honeycomb structure is used as a filter such as a DPF, as shown in Fig. 8, a holding member 22 constituted of a ceramic fiber mat or the like is usually wound around an outer peripheral wall of the plugged honeycomb structure 1. Moreover, the structure is usually received (canned) in a cylindrical metal container 20 in a state where the structure is bound with retainer rings 21 around the ends of the structure. However, when the densifying material adheres to the ends of the plugged portions and eventually the plugged honeycomb structure having the total length in excess of a tolerance is manufactured, a compressive load of the retainer rings 21 onto the outer peripheral portions of the end surfaces of the plugged honeycomb structure 1 becomes excessively large, during the canning. In the plugged honeycomb structure 1, damages such as cracks and chips might be generated.

Moreover, when the plugged honeycomb structure 1 is regenerated, heat generated by burning the soot moves to a downstream side owing to the flow of the exhaust gas. In consequence, a temperature of the outlet end surface 5 becomes higher than that of the inlet end surface 3. Therefore, a high thermal stress is generated especially on the outlet end surface 5 side. Consequently, when the recess portions 11 are present at the ends of the plugged portions 4 which plug the open frontal areas of the cells on the outlet end surface 5 side, the thermal stress concentrates on the recess portions 11. End-surface cracks are easily generated.

[Patent Document 1] JP-A-2005-211836

The document US 2006/213164 solves the problem of recesses in the plugs by applying a sealing member against the end face of the honeycomb during drying of the plugging slurry.

SUMMARY OF THE INVENTION

The present invention has been developed in view of such conventional situations, and an object thereof is to provide a plugged honeycomb structure which does not decrease an area of a filter layer or does not increase the total length thereof, but can suppress the deposition of soot at ends of plugged portions on an inlet end surface side or the generation of end-surface cracks on an outlet end surface side during regeneration, when the plugged honeycomb structure is used as a filter such as a DPF.

To achieve the above object, according to the present invention, the following plugged honeycomb structure is provided.

[1] A plugged honeycomb structure comprising: a honeycomb structured body where a plurality of cells communicating between an inlet end surface which becomes an inlet side of a fluid and an outlet end surface which becomes an outlet side of the fluid are partitioned by porous partition walls; and plugged portions to plug open frontal areas of the predetermined cells on the side of the inlet end surface and open frontal areas of the remaining cells on the side of the outlet end surface, wherein the plugged portions are formed by charging the cells with a constituent material of the plugged portions, followed by firing, and in a region having a width of at least 20 mm from an outer periphery of each of the inlet end surface and the outlet end surface, a smoothing treatment by end-surface polishing is performed so that a depth of a recess portion generated at an end of each of the plugged portions during the firing becomes small.

[2] The plugged honeycomb structure according to [1], wherein the smoothing treatment by the end-surface polishing is performed so that the depth of the recess portion becomes smaller than 0.02 mm.

[3] The plugged honeycomb structure according to [1] or [2], wherein in a region inside a circle having, as a center thereof, a center of the largest circle contained in each of the inlet end surface and the outlet end surface and having a diameter which is 40% of a diameter of the largest circle, the smoothing treatment by the end-surface polishing is not performed.

The invention also provides the method of making a plugged honeycomb structure as set out in claim 4.

Effect of the Invention

In a plugged honeycomb structure of the present invention, a region having a width of at least 20 mm from an outer periphery of each end surface (an inlet end surface and an outlet end surface) is subjected to a smoothing treatment by end-surface polishing so that a depth of a recess portion generated at an end of each plugged portion during firing is decreased. Consequently, in the region on the side of the inlet end surface, soot is not easily deposited at the ends of the plugged portions. In consequence, it is possible to suppress the clogging of open frontal areas of cells due to the deposition of the soot which is unburnt and remains during regeneration. It is possible to prevent the rapid increase of a pressure loss or the deterioration of fuel efficiency due to the increase. Moreover, in the region on the side of the outlet end surface, the depth of the recess portion at the end of each plugged portion becomes small. Therefore, it is possible to alleviate the concentration of a thermal stress on the recess portions during the regeneration and to suppress the generation of end-surface cracks. Moreover, these effects are realized by the smoothing treatment by the end-surface polishing. In consequence, a problem such as a damage during canning due to the decrease of an area of a filter layer or the increase of the total length of the plugged honeycomb structure does not occur.

BRIEF DESCRIPTION OF THE DRAWING

Fig. 1 is a sectional view showing an example of a plugged honeycomb structure of the present invention;
Fig. 2 is a plan view showing an end surface (an inlet end surface or an outlet end surface) of the plugged honeycomb structure of the present invention;
Fig. 3 is a sectional view showing that a recess portion (a shrinkage cavity) is generated at an end of a plugged portion;
Fig. 4 is a sectional view showing states of the end of the plugged portion before and after performing a smoothing treatment by end-surface polishing;
Fig. 5 is a plan view showing a region which preferably is not subjected to the smoothing treatment by the end-surface polishing in the end surface (the inlet end surface or the outlet end surface) of the plugged honeycomb structure;
Fig. 6 is an explanatory view showing an example of a method of the smoothing treatment by the end-surface polishing;
Fig. 7 is an explanatory view showing the example of the method of the smoothing treatment by the end-surface polishing;
Fig. 8 is a sectional view showing a canning state of the plugged honeycomb structure; and
Fig. 9 is a sectional view showing a conventional plugged honeycomb structure.

DESCRIPTION OF THE PREFERRED EMBODIMENTS

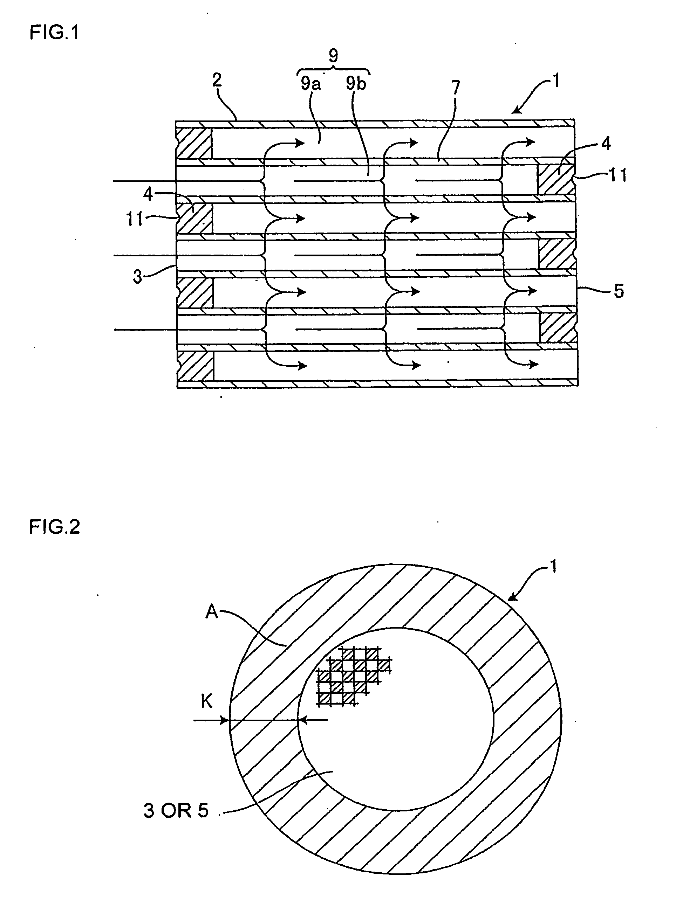

Hereinafter, the present invention will be described with respect to a specific embodiment, but the present invention is not limited to this embodiment when interpreted, and various changes, modifications and improvements can be added thereto on the basis of knowledge of a person skilled in the art without departing from the scope of the present invention.
As shown in Fig. 1, a plugged honeycomb structure 1 of the present invention includes a honeycomb structured body 2 where a plurality of cells 9 communicating between an inlet end surface 3 which becomes an inlet side of a fluid and an outlet end surface 5 which becomes an outlet side of the fluid are partitioned by porous partition walls 7; and plugged portions 4 to plug open frontal areas of predetermined cells 9a on the side of the inlet end surface 3 and open frontal areas of remaining cells 9b on the side of the outlet end surface 5.
When the plugged honeycomb structure 1 having such a constitution is used as a filter such as a DPF, a basic purification mechanism is similar to the above-mentioned conventional plugged honeycomb structure. That is, an exhaust gas first flows into the cells 9b whose open frontal areas are not plugged on the inlet end surface 3 side of the plugged honeycomb structure 1 and are plugged on the outlet end surface 5 side thereof, and passes through pores of the porous partition walls 7. The exhaust gas moves to the cells 9a whose open frontal areas are plugged on the inlet end surface 3 side and are not plugged on the outlet end surface 5 side, and is discharged to the outside through the cells 9a. In this case, the partition walls 7 become filter layers, and soot in the exhaust gas is caught by the partition walls 7, and deposited on the partition walls 7.
In the plugged honeycomb structure 1 of the present invention, the plugged portions 4 are formed by charging the cells 9 with a constituent material of the plugged portions in a slurried state or the like, followed by firing. As shown in Fig. 3, a recess portion (a shrinkage cavity) 11 is generated at an end of the plugged portion 4 during this firing. A depth of the recess portion 11 is usually from about 0.06 to 0.15 mm. Moreover, as a characteristic constitution of the plugged honeycomb structure 1 of the present invention, in a region A having a width of at least 20 mm from an outer periphery of each of the inlet end surface 3 and the outlet end surface 5 shown in Fig. 2, a smoothing treatment by end-surface polishing is performed so that a depth of the recess portion 11 generated at the end of the plugged portion 4 during the firing becomes small.
When a depth H of the recess portion 11 at the end of the plugged portion 4 becomes small by the smoothing treatment by the end-surface polishing as shown in Fig. 4, on the inlet end surface 3 side of Fig. 1, the soot does not easily enter the recess portion 11. Therefore, the soot is not easily deposited at the end of the plugged portion 4. In consequence, it is possible to suppress the clogging of the open frontal areas of the cells 9 around the plugged portions 4 due to the deposition of the soot which is unburnt and remains during regeneration. It is possible to prevent the rapid increase of a pressure loss or the deterioration of fuel efficiency due to the increase. Moreover, on the outlet end surface 5 side, the depth H of the recess portion 11 at the end of the plugged portion 4 becomes small, whereby it is possible to alleviate the concentration of a thermal stress on the recess portion 11 during the regeneration. It is possible to suppress the generation of end-surface cracks. Moreover, these effects are realized by the smoothing treatment by the end-surface polishing. In consequence, unlike the above-mentioned conventional technology, a problem such as a damage during canning due to the decrease of an area of the filter layer or the increase of the total length of the plugged honeycomb structure 1 does not occur.

It is to be noted that when the width of the region A subjected to the smoothing treatment by the end-surface polishing is smaller than 20 mm, an area, in which it is possible to suppress the deposition of the soot at the ends of the plugged portions 4 and to alleviate the concentration of the thermal stress on the recess portions 11 during the regeneration, is excessively small. Thus, a sufficient effect cannot be obtained.

In the plugged honeycomb structure 1 of the present invention, the smoothing treatment by the end-surface polishing is preferably performed so that the depth H of the recess portion 11 becomes smaller than 0.02 mm. When the depth H of the recess portion 11 is smaller than 0.02 mm, it is possible to remarkably effectively suppress the deposition of the soot at the ends of the plugged portions 4 and the concentration of the thermal stress on the recess portions 11 during the regeneration. The depth of the recess portion 11 can be measured by using, for example, an optical gauge.

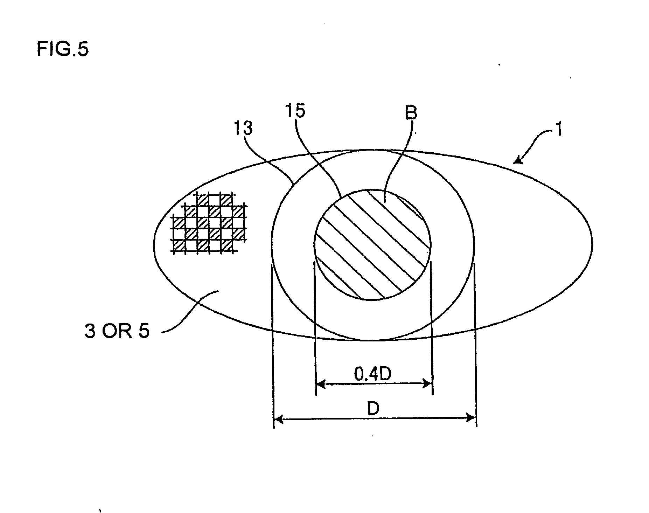

In the plugged honeycomb structure 1 of the present invention, the region A subjected to the smoothing treatment by the end-surface polishing may be a region in excess of the width of 20 mm from the outer periphery of each of the inlet end surface 3 and the outlet end surface 5. However, when an oxidation catalyst of Pt, Pd, Rh, Ag or the like is loaded onto the partition walls of the plugged honeycomb structure 1 to promote the burning of the soot during the regeneration, in a region B inside a circle 15 having, as a center thereof, a center of the largest circle 13 included in each of the inlet end surface 3 and the outlet end surface 5 and having a diameter 0.4D which is 40% of a diameter D of the largest circle 13 as shown in Fig. 5, the smoothing treatment by the end-surface polishing preferably is not performed. It is to be noted that Fig. 5 shows an example where the respective end surfaces (the inlet end surface 3 and the outlet end surface 5) are elliptic. However, when each of the end surfaces is round, the largest circle contained in the end surface becomes a circle which matches the outer periphery of the end surface (the circle having the same diameter and center as those of the end surface). Therefore, in this case, the region inside the circle having the same center as that of the end surface and having a diameter which is 40% of that of the end surface is a region which preferably is not subjected to the smoothing treatment by the end-surface polishing.

When the smoothing treatment by the end-surface polishing is performed, part of abrasive powder generated by the treatment enters the cells and adheres to the partition walls. A large part of the adhering abrasive powder is removed by air blowing or the like, but it is difficult to completely remove all the abrasive powder. Moreover, when the abrasive powder is not removed and remains on the partition walls, the abrasive powder disturbs contact between the soot and the oxidation catalyst. Therefore, a time required for the regeneration becomes long. Usually, the burning of the soot during the regeneration starts with a portion around the center of a section (the section vertical to an axial direction) of the plugged honeycomb structure in which a temperature easily rises owing to the exhaust gas, and burning heat generated there is transmitted to the periphery. The burning of the soot occurs in the whole plugged honeycomb structure. Therefore, in the region B, the smoothing treatment by the end-surface polishing preferably is not performed to prevent, as much as possible, the abrasive powder, which disturbs the contact between the soot and the oxidation catalyst, from adhering to the partition walls around this center.

In the plugged honeycomb structure 1 of the present invention, there is not any special restriction on a material constituting the honeycomb structured body (the structure excluding the plugged portions 4) 2. However, from the viewpoints of a strength, a thermal resistance and the like, preferable examples of the material include silicon carbide (SiC); a silicon-silicon carbide composite material formed by using silicon carbide (SiC) as an aggregate and silicon (Si) as a binder; silicon nitride; cordierite; mullite; alumina; spinel; a silicon carbide-cordierite composite material; lithium aluminum silicate; aluminum titanate; and an Fe-Cr-Al metal. Moreover, as the constituent material of the plugged portions 4, the same material as that of the honeycomb structured body 2 is preferably used to decrease a thermal expansion difference between the plugged portions 4 and the honeycomb structured body 2.

In the plugged honeycomb structure 1 of the present invention, a thickness of the partition walls 7 is preferably from 178 to 508 $\mu$m (7 to 20 mil), more preferably from 203 to 406 $\mu$m (8 to 16 mil), and further preferably from 254 to 356 $\mu$m (10 to 14 mil). When the thickness of the partition walls 7 is smaller than 178 $\mu$m (7 mil), the strength becomes insufficient, and a thermal shock resistance deteriorates sometimes. On the other hand, when the thickness of the partition walls 7 exceeds 508 $\mu$m (20 mil), a pressure loss becomes excessively large sometimes.

Moreover, in the plugged honeycomb structure 1 of the present invention, a cell density is preferably from 217 kilo to 543 kilo cells/$m^2$ (140 to 350 cells/$in^2$ (cpsi (cells per square inch))), more preferably from 248 kilo to 496 kilo cells/$m^2$ (160 to 320 cpsi), and further preferably from 310 kilo to 465 kilo cells/$m^2$ (200 to 300 cpsi). When the cell density is smaller than 217 kilo cells/$m^2$ (140 cpsi), a contact efficiency with a fluid becomes insufficient sometimes. On the other hand, when the cell density exceeds 543 kilo cells/m$^2$ (350 cpsi), the pressure loss becomes excessively large sometimes.

As a method of preparing the honeycomb structured body (the structure excluding the plugged portions 4) 2 constituting the plugged honeycomb structure 1 of the present invention, a heretofore known method can be used. As an example of a specific method, a binder such as methylcellulose, hydroxypropoxyl cellulose, hydroxyethylcellulose, carboxymethylcellulose or polyvinyl alcohol, a pore former, a surfactant, and water as a solvent are added to the above material to obtain a kneaded material having plasticity. This kneaded material is extruded into a predetermined honeycomb shape, and then dried with microwaves, hot air or the like, followed by firing. The firing may be performed prior to forming the plugged portions 4, or may be performed together with the firing of the plugged portions 4 after forming the plugged portions 4 in the cells 9.

As a method of plugging the cells 9, a heretofore known method can be used. As an example of a specific method, a sheet is attached to the end surface of the honeycomb structured body 2 prepared by the above method. Afterward, holes are made at positions of the sheet which correspond to the cells to be plugged. While this sheet is attached, the end surface of the honeycomb structured body 2 is immersed into a plugging slurry obtained by slurrying the constituent material of the plugged portions 4. Open ends of the cells to be plugged through the holes made in the sheet are charged with the plugging slurry. The honeycomb structured body is dried and fired to harden.

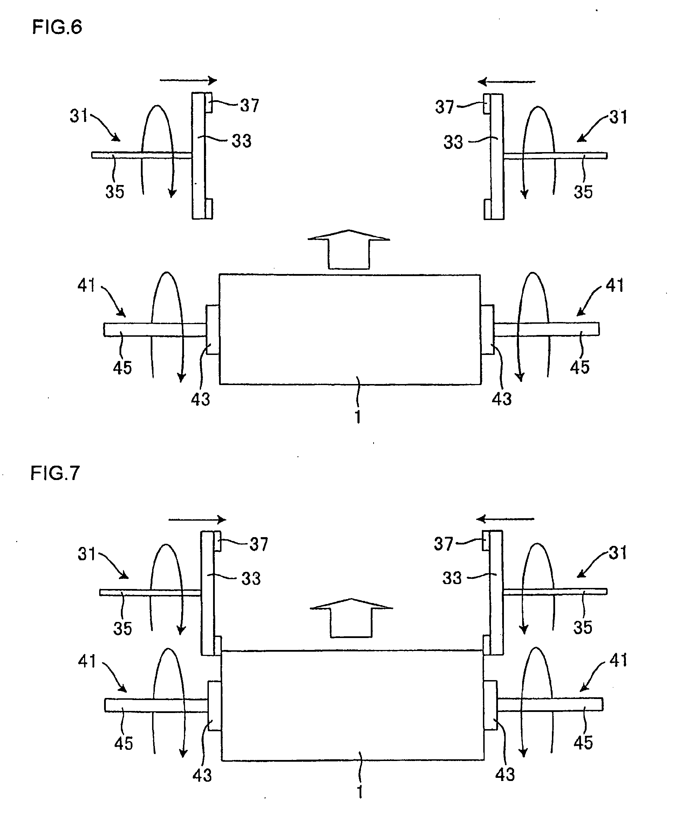

The plugged honeycomb structure 1 of the present invention is obtained by plugging the cells 9 by such a method and then performing the smoothing treatment by the end-surface polishing. Fig. 6 and Fig. 7 are explanatory views showing an example of a method of the smoothing treatment by the end-surface polishing. In this example, for the smoothing treatment by the end-surface polishing, there are used a pair of polishing tools 31 (a set of two polishing tools) each including around rotary plate 33, a rotary shaft 35 attached vertically to the center of one surface of the rotary plate 33, and a ring-like grindstone 37 attached to the other surface of the rotary plate 33. The pair of polishing tools 31 are arranged so that the surfaces of the rotary plates 33 to which the grindstones 37 are attached face each other and so that the rotary shafts 35 are positioned along the same axis. The rotary shafts 35 are rotated by a not-shown drive mechanism, thereby rotating the rotary plates 33 and the grindstones 37. Moreover, the pair of polishing tools 31 are arranged movably in the axial direction of the polishing tools 31, whereby a space between the tools can be regulated.

The centers of the end surfaces of the plugged honeycomb structure 1 subjected to the smoothing treatment by the end-surface polishing are held from both sides thereof in the axial direction by a pair of chuck tools 41 (a set of two chuck tools) each including a disc-like chuck portion 43 and a rotary shaft 45 attached vertically to the center of the surface of the chuck portion 43. The rotary shafts 45 are rotated by a not-shown drive mechanism, thereby rotating the plugged honeycomb structure 1. Moreover, the chuck tools 41 are constituted so that the plugged honeycomb structure 1 is movable in a diametric direction while the plugged honeycomb structure 1 is held.

Furthermore, as shown in Fig. 6, the rotary shafts 35 of the polishing tools 31 are arranged in parallel with the rotary shafts 45 of the chuck tools 41, and the chuck tools 41 holding the plugged honeycomb structure 1 are brought close to the polishing tools present in the diametric direction of the plugged honeycomb structure 1. As shown in Fig. 7, the respective end surfaces (the inlet end surface and the outlet end surface) of the plugged honeycomb structure 1 are brought into contact with the grindstones 37 of the polishing tools 31. At this time, the grindstones 37 of the polishing tools 31 are rotated at a high speed with a rotation number of about 50 to 500 rpm. On the other hand, the plugged honeycomb structure 1 held by the chuck tools 41 is rotated at a low speed with a rotation number of about 5 to 30 rpm. Thus, the end surfaces of the plugged honeycomb structure 1 are brought into contact with the grindstones 37, and are both rotated, whereby the end surfaces of the plugged honeycomb structure 1 are subjected to the smoothing treatment by the end-surface polishing. It is to be noted that a polishing amount of the end-surface polishing in a depth direction can be regulated by controlling a space between the pair of polishing tools 31. Moreover, a width of a region subjected to the smoothing treatment by the end-surface polishing can be regulated by controlling a distance between the rotary shaft 35 of the polishing tool 31 and the rotary shaft 45 of the chuck tool 41.

Examples

Hereinafter, the present invention will be described in detail with respect to examples, but the present invention is not limited to these examples.

(Examples 1 to 5 and Comparative Example 1)

A binder, a dispersant, water and the like were added to a raw material (obtained by mixing predetermined amounts of talc, alumina and kaolin) constituting cordierite, followed by kneading, to prepare a kneaded material. This kneaded material was extruded to obtain a honeycomb-like formed body (the honeycomb formed body). Next, open frontal areas of predetermined cells on an inlet end surface side of the obtained honeycomb formed body and open frontal areas of the remaining cells on an outlet end surface side thereof were charged with a plugging material. The areas were charged with the plugging material so that the cells whose open frontal areas were charged with the plugging material and the cells which were not charged with the plugging material developed a checkered pattern in the respective end surfaces. Moreover, a composition of the plugging material was the same as that of the honeycomb formed body. Afterward, this honeycomb formed body was fired at a predetermined temperature for a predetermined period of time, to obtain a plugged honeycomb structure whose outer shape was a columnar shape with a diameter of 144 mm and a length of 152 mm. A partition wall thickness was 305 $\mu$m (12 mil), a cell density was 465 kilo cells/m$^2$ (300 cpsi), and a cell shape was a quadrangular shape. It is to be noted that at this time, recess portions (shrinkage cavities) having a depth of about 0.11 to 0.12 mm were generated at ends of plugged portions of the obtained plugged honeycomb structure.

Next, in the respective end surfaces (the inlet end surface and the outlet end surface) of this plugged honeycomb structure, a region, in which a width K from an outer periphery of each end surface shown in Fig. 2 had a value shown in Table 1, was subjected to a smoothing treatment by end-surface polishing so that a depth H of recess portions generated at the ends of the plugged portions became smaller than 0.02 mm. Thus, plugged honeycomb structures of Examples 1 to 5 and Comparative Example 1 were obtained. It is to be noted that the smoothing treatment by the end-surface polishing was performed by a method described above with reference to Fig. 6 and Fig. 7. As to the plugged honeycomb structures of Examples 1 to 5 and Comparative Example 1 subjected to the smoothing treatment by the end-surface polishing in this manner, a crack resistance, a pressure loss increase ratio, canning properties and a regeneration performance were evaluated by the following methods. The evaluation results are shown in Table 1.

[Evaluations of Crack Resistance and Pressure Loss Increase Ratio]

Each plugged honeycomb structure was attached to an exhaust tube of a diesel engine. Then, the diesel engine was operated to circulate an exhaust gas through the plugged honeycomb structure, thereby depositing soot in the plugged honeycomb structure at a rate of 6 g/l. Afterward, an exhaust gas temperature was raised to about 600°C, and an exhaust gas flow rate was controlled at 2 m$^3$/min. The soot deposited in the plugged honeycomb structure was burned by regulating time so that a regeneration efficiency obtained by the following equation (1) was from 50 to 60%. This regeneration cycle was repeated 20 times. Afterward, the plugged honeycomb structure was removed from the exhaust tube, and it was checked whether or not cracks were generated in the outlet end surface. When any cracks were not generated, the evaluation was "Good". When the cracks were generated, the evaluation was "Bad". Moreover, there were measured a pressure loss (the first pressure loss) of the plugged honeycomb structure prior to burning the soot (a state where 6 g/l of the soot was deposited) in the first regeneration cycle and a pressure loss (the twentieth pressure loss) of the plugged honeycomb structure prior to burning the soot (the state where 6 g/l of the soot was deposited) in the twentieth regeneration cycle. When the twentieth pressure loss was twice the first pressure loss or smaller, the evaluation was "Good". When the loss exceeded twice, the evaluation was "Bad".

$$\texttt{Regeneration efficiency (\%) = (an initial soot}$$
$$\texttt{amount-a soot amount after the regeneration)/the initial}$$
$$\texttt{soot amount} \times \texttt{100 (1)}$$

[Evaluation of Canning Properties]

An allowable limit value of a length of the plugged honeycomb structure was set, and a metal container for receiving (canning) the plugged honeycomb structure was prepared on the basis of the set value. The plugged honeycomb structure was pressed into and received in this metal container, and then cones were attached to an inlet and an outlet of the metal container. Then, while applying a vibration to this metal container with a vibration acceleration of 30 G and a vibration frequency of 100 Hz, the container was held at 150°C for ten minutes, a temperature was raised to 800°C, and the container was held for ten minutes. This heating/vibrating cycle was repeated 50 times. Afterward, the plugged honeycomb structure was removed from the metal container, and it was confirmed whether or not cracks were generated in a contact portion of the structure with the metal container. When any cracks were not generated, the evaluation was "Good". When the cracks were generated, the evaluation was "Bad".

[Evaluation of Regeneration Performance]

The partition walls of the plugged honeycomb structure were coated with a slurry including an oxidation catalyst to load the oxidation catalyst onto the partition walls. Afterward, this plugged honeycomb structure was placed into the metal container, and assembled into an exhaust system of a downstream portion of the diesel engine, together with an oxidation catalyst loading member prepared separately. Next, the diesel engine was operated to circulate the exhaust gas through the plugged honeycomb structure, and 6 g/l of the soot was deposited in the plugged honeycomb structure. Afterward, an exhaust gas temperature was raised to about 600°C, and held for five minutes, to perform a regeneration treatment of burning the soot deposited in the plugged honeycomb structure. The regeneration efficiency was obtained from the soot amount (the initial soot amount) prior to the regeneration and the soot amount after the regeneration by the above equation (1). When the regeneration efficiency was 50% or more, the evaluation was "Good". When the regeneration efficiency was smaller than 50%, the evaluation was "Bad".

(Comparative Example 2)

In the same manner as in Examples 1 to 5 and Comparative Example 1, a plugged honeycomb structure prior to a smoothing treatment by end-surface polishing was obtained as the plugged honeycomb structure of Comparative Example 2. As to this plugged honeycomb structure of Comparative Example 2, a crack resistance, a pressure loss increase ratio, canning properties and a regeneration performance were evaluated in the same manner as in Examples 1 to 5 and Comparative Example 1. The evaluation results are shown in Table 1.

(Comparative Example 3)

In the same manner as in Examples 1 to 5 and Comparative Example 1, a plugged honeycomb structure prior to a smoothing treatment by end-surface polishing was obtained. End surfaces (an inlet end surface and an outlet end surface) of this plugged honeycomb structure were spray-coated with a densifying material, and then dried at about 500°C, to obtain the plugged honeycomb structure of Comparative Example 3. It is to be noted that the densifying material was prepared by adding a binder, a pore former, a dispersant, water and the like to a raw material (obtained by mixing predetermined amounts of talc, alumina and kaolin) constituting cordierite, followed by kneading, and regulating a viscosity to be suitable for the spray-coating. A depth H of recess portions at ends of plugged portions of the structure spray-coated with the densifying material and dried was smaller than 0.02 mm. As to this plugged honeycomb structure of Comparative Example 3, a crack resistance, a pressure loss increase ratio, canning properties and a regeneration performance were evaluated in the same manner as in Examples 1 to 5 and Comparative Example 1. The evaluation results are shown in Table 1.

[Table 1]

| | Inlet end surface | | Outlet end surface | | Crack resistance | Canning properties | Pressure loss increase ratio | Regeneration performance |
|---|---|---|---|---|---|---|---|---|
| | Depth H of recess portion at plugged portion end (mm) | Width K of region subjected to smoothing treatment by end-surface polishing (mm) | Depth H of recess portion at plugged portion end (mm) | Width K of region subjected to smoothing treatment by end-surface polishing (mm) | | | | |
| Example 1 | Smaller than 0.02 | 20 | Smaller than 0.02 | 20 | Good | Good | Good | Good |
| Example 2 | Smaller than 0.02 | 30 | Smaller than 0.02 | 30 | Good | Good | Good | Good |
| Example 3 | Smaller than 0.02 | 40 | Smaller than 0.02 | 40 | Good | Good | Good | Good |
| Example 4 | Smaller than 0.02 | 50 | Smaller than 0.02 | 50 | Good | Good | Good | Bad |
| Example 5 | Smaller than 0.02 | 60 | Smaller than 0.02 | 60 | Good | Good | Good | Bad |
| Comparative Example 1 | Smaller than 0.02 | 10 | Smaller than 0.02 | 10 | Bad | Good | Bad | Good |
| Comparative Example 2 | 0.11 | 0 | 0.12 | 0 | Bad | Bad | Bad | Good |
| Comparative Example 3 | Smaller than 0.02 | 0 | Smaller than 0.02 | 0 | Good | Bad | Bad | Good |

As shown in Table 1, the plugged honeycomb structures of Examples 1 to 5 according to the embodiment of the present invention indicated high evaluation results of the crack resistance, the pressure loss increase ratio and the canning properties as compared with the plugged honeycomb structure of Comparative Example 2 which was not subjected to the smoothing treatment by the end-surface polishing. In the plugged honeycomb structure of Comparative Example 3 in which the smoothing treatment by the end-surface polishing was not performed and the ends of the plugged portions were densified by the spray-coating of the densifying material, a total length of the structure became long, and hence the canning properties deteriorated. Moreover, the densifying material adhered not only to the ends of the plugged portions but also to the partition walls functioning as filter layers. Therefore, the result of the evaluation of the pressure loss increase ratio was also inferior to the plugged honeycomb structures of Examples 1 to 5. Moreover, in the plugged honeycomb structure of Comparative Example 1 in which the region subjected to the smoothing treatment by the end-surface polishing was a region having a width smaller than 20 mm from the outer periphery of each end surface, the region subjected to the treatment was excessively small. Therefore, a sufficient treatment effect could not be obtained, and the evaluations of the crack resistance and the pressure loss increase ratio were low. It is to be noted that in the plugged honeycomb structures of Examples 4 and 5, the smoothing treatment by the end-surface polishing was performed on a region inside a circle having, as a center thereof, a center of the largest circle contained in each end surface and having a diameter which was 40% of that of the largest circle. In these plugged honeycomb structures, the only evaluation of the regeneration performance was low. It has been considered that the smoothing treatment by the end-surface polishing was performed around the center of each end surface and hence the abrasive powder adhered to the partition walls around the center, to disturb the contact between the soot and the oxidation catalyst.

A plugged honeycomb structure of the present invention can suitably be used as a dust collecting filter such as a DPF.

Description of Reference Numerals

1: plugged honeycomb structure. 2: honeycomb structured body. 3: inlet end surface, 4: plugged portion, 5: outlet end surface, 7: partition wall. 9: cell, 11: recess portion, 13: circle, 15: circle, 20: metal container, 21: retainer ring, 22: holding member, 31: polishing tool, 33: rotary plate, 35: rotary shaft, 37: grindstone, 41: chuck tool, 43: chuck portion, and 45: rotary shaft.

Claims

1.  A plugged honeycomb structure comprising: a honeycomb structured body where a plurality of cells communicating between an inlet end surface which becomes an inlet side of a fluid and an outlet end surface which becomes an outlet side of the fluid are partitioned by porous partition walls; and'plugged portions to plug open frontal areas of the predetermined cells on the side of the inlet end surface and open frontal areas of the remaining cells on the side of the outlet end surface,

    wherein the plugged portions are formed by charging the cells with a constituent material of the plugged portions, followed by firing, and
    in a region having a width of at least 20 mm from an outer periphery of each of the inlet end surface and the outlet end surface, a smoothing treatment by end-surface polishing is performed so that a depth of a recess portion generated at an end of each of the plugged portions during the firing becomes small.

2.  The plugged honeycomb structure according to claim 1, wherein the smoothing treatment by the end-surface polishing is performed so that the depth of the recess portion becomes smaller than 0.02 mm.

3.  The plugged honeycomb structure according to claim 1 or 2, wherein in a region inside a circle having, as a center thereof, a center of the largest circle contained in each of the inlet end surface and the outlet end surface and having a diameter which is 40% of a diameter of the largest circle, the smoothing treatment by the end-surface polishing is not performed.

4.  A method of making a plugged honeycomb structure, the plugged honeycomb structure comprising: a honeycomb structured body where a plurality of cells communicating between an inlet end surface which becomes an inlet side of a fluid and an outlet end surface which becomes an outlet side of the fluid are partitioned by porous partition walls; and plugged portions to plug open frontal areas of the predetermined cells on the side of the inlet end surface and open frontal areas of the. remaining cells on the side of the outlet end surface,

wherein in the method the plugged portions are formed by charging the cells with a constituent material of the plugged portions, followed by firing, and

in a region having a width of at least 20 mm from an outer periphery of each of the inlet end surface and the outlet end surface, a smoothing treatment by end-surface polishing is performed so that a depth of a recess portion generated at an end of each of the plugged portions during the firing becomes small.

5. The method of making a plugged honeycomb structure according to claim 4, wherein the smoothing treatment by the end-surface polishing is performed so that the depth of the recess portion becomes smaller than 0.02 mm.

6. The method of making a plugged honeycomb structure according to claim 4 or 5, wherein in a region inside a circle having, as a center thereof, a center of the largest circle contained in each of the inlet end surface and the outlet end surface and having a diameter which is 40% of a diameter of the largest circle, the smoothing treatment by the end-surface polishing is not performed.

## Patentansprüche

1. Verschlossene Wabenstruktur, umfassend: einen Wabenstrukturkörper, in dem eine Vielzahl von Zellen zwischen einer Einlassendfläche, die zu einer Einlassseite eines Fluides wird, und einer Auslassendfläche, die zur Auslassseite des Fluides wird, durch poröse Trennwände getrennt sind; und verschlossene Abschnitte zum Verschließen von offenen Vorderbereichen der vorbestimmten Zellen auf der Seite der Einlassendfläche und offene Vorderseitenbereiche der übrigen Zellen auf der Seite der Auslassendfläche,

wobei die verschlossenen Abschnitte durch Befüllen der Zellen mit einem Füll-Material der verschlossenen Abschnitte, gefolgt durch Brennen, ausgebildet werden, und wobei

in einem Bereich mit einer Breite von zumindest 20 mm von einem Außenumfang jeder der Einlassendfläche und der Auslassendfläche, eine Glättungsbehandlung durch Endflächenpolieren durchgeführt wird, sodass eine Tiefe eines Vertiefungsabschnitts, der während des Brennens an einem Ende jedes der verschlossenen Abschnitte erzeugt wird, klein wird.

2. Verschlossene Wabenstruktur nach Anspruch 1, wobei die Glättungsbehandlung durch Endflächenpolieren so durchgeführt wird, dass die Tiefe des Vertiefungsabschnitts kleiner als 0,02 mm wird.

3. Verschlossene Wabenstruktur nach Anspruch 1 oder 2, wobei in einem Bereich innerhalb eines Kreises, der als Mittelpunkt den Mittelpunkt des größten Kreises, der in jeder der Einlassendfläche und der Auslassendfläche enthalten ist, sowie einen Durchmesser aufweist, der 40 % des Durchmessers des größten Kreises ausmacht, die Glättungsbehandlung durch Endflächenpolieren nicht durchgeführt wird.

4. Verfahren zum Herstellen einer verschlossenen Wabenstruktur, wobei die verschlossene Wabenstruktur Folgendes umfasst: einen Wabenstrukturkörper, in dem eine Vielzahl von Zellen zwischen einer Einlassendfläche, die zu einer Einlassseite eines Fluides wird, und einer Auslassendfläche, die zur Auslassseite des Fluides wird, durch poröse Trennwände getrennt sind; und verschlossene Abschnitte zum Verschließen von offenen Vorderbereichen der vorbestimmten Zellen auf der Seite der Einlassendfläche und offene Vorderseitenbereiche der übrigen Zellen auf der Seite der Auslassendfläche,

wobei im Verfahren die verschlossenen Abschnitte durch Befüllen der Zellen mit einem Füll-Material der verschlossenen Abschnitte, gefolgt durch Brennen, ausgebildet werden, und wobei

in einem Bereich mit einer Breite von zumindest 20 mm von einem Außenumfang jeder der Einlassendfläche und der Auslassendfläche, eine Glättungsbehandlung durch Endflächenpolieren durchgeführt wird, sodass eine Tiefe eines Vertiefungsabschnitts, der während des Brennens an einem Ende jedes der verschlossenen Abschnitte erzeugt wird, klein wird.

5. Verfahren zum Herstellen einer verschlossenen Wabenstruktur nach Anspruch 4, wobei die Glättungsbehandlung durch Endflächenpolieren so durchgeführt wird, dass die Tiefe des Vertiefungsabschnitts kleiner als 0,02 mm wird

6. Verfahren zum Herstellen einer verschlossenen Wabenstruktur nach Anspruch 4 oder 5, wobei in einer Region in einem Kreis, der als Mittelpunkt den Mittelpunkt des größten Kreises, der in jeder der Einlassendfläche und der Auslassendfläche enthalten ist, sowie einen Durchmesser aufweist, der 40 % des Durchmessers des größten Kreises ausmacht, die Glättungsbehandlung durch Endflächenpolieren nicht durchgeführt wird.

**Revendications**

1. Structure en nid d'abeilles obturée comprenant : un corps structuré en nid d'abeilles dans lequel une pluralité de cellules Communiquant entre une surface d'extrémité d'entrée qui devient un côté d'entrée d'un fluide et une surface d'extrémité de sortie qui devient un côté de sortie du fluide sont séparées par des parois de séparation poreuses ; et des parties obturées pour obturer les zones frontales ouvertes des cellules prédéterminées du côté de la surface d'extrémité d'entrée et les zones frontales ouvertes des cellules restantes du côté de la surface d'extrémité de sortie, dans laquelle les parties obturées sont formées en chargeant les cellules avec un matériau constitutif des parties obturées, et en effectuant ensuite une cuisson, et

dans une région ayant une largeur d'au moins 20 mm à partir d'une périphérie extérieure de chacune de la surface d'extrémité d'entrée et de la surface d'extrémité de sortie, un traitement de lissage par polissage de surface d'extrémité est effectué de sorte qu'une profondeur d'une partie en retrait générée à une extrémité de chacune des parties obturées pendant la cuisson devienne faible.

2. Structure en nid d'abeilles obturée selon la revendication 1, dans laquelle le traitement de lissage par polissage de surface d'extrémité est effectué de sorte que la profondeur de la partie en retrait devienne inférieure à 0,02 mm.

3. Structure en nid d'abeilles obturée selon la revendication 1 ou 2, dans laquelle, dans une région à l'intérieur d'un cercle ayant, en tant que centre de celui-ci, un centre du cercle le plus grand contenu dans chacune de la surface d'extrémité d'entrée et de la surface d'extrémité de sortie et ayant un diamètre qui est égal à 40 % d'un diamètre du cercle le plus grand, le traitement de lissage par polissage de surface d'extrémité n'est pas effectué.

4. Procédé de réalisation d'une structure en nid d'abeilles obturée, la structure en nid d'abeilles obturée comprenant : un corps structuré en nid d'abeilles dans lequel une pluralité de cellules communiquant entre une surface d'extrémité d'entrée qui devient un côté d'entrée d'un fluide et une surface d'extrémité de sortie qui devient un côté de sortie du fluide sont séparées par des parois de séparation poreuses ; et des parties obturées pour obturer les zones frontales ouvertes des cellules prédéterminées du côté de la surface d'extrémité d'entrée et les zones frontales ouvertes des cellules restantes du côté de la surface d'extrémité de sortie,

dans lequel, dans le procédé, les parties obturées sont formées en chargeant les cellules avec un matériau constitutif des parties obturées, et en effectuant ensuite une cuisson, et

dans une région ayant une largeur d'au moins 20 mm à partir d'une périphérie extérieure de chacune de la surface d'extrémité d'entrée et de la surface d'extrémité de sortie, un traitement de lissage par polissage de surface d'extrémité est effectué de sorte qu'une profondeur d'une partie en retrait générée à une extrémité de chacune des parties obturées pendant la cuisson devienne faible.

5. Procédé de réalisation d'une structure en nid d'abeilles obturée selon la revendication 4, dans lequel le traitement de lissage par polissage de surface d'extrémité est effectué de sorte que la profondeur de la partie en retrait devienne inférieure à 0,02 mm.

6. Procédé de réalisation d'une structure en nid d'abeilles obturée selon la revendication 4 ou 5, dans lequel, dans une région à l'intérieur d'un cercle ayant, en tant que centre de celui-ci, un centre du cercle le plus grand contenu dans chacune de la surface d'extrémité d'entrée et de la surface d'extrémité de sortie et ayant un diamètre qui est égal à 40 % d'un diamètre du cercle le plus grand, le traitement de lissage par polissage de surface d'extrémité n'est pas effectué.

FIG.1

FIG.2

FIG.3

FIG.4

FIG.5

FIG.6

FIG.7

FIG.8

FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005211836 A
- US 2006213164 A